# EUROPÄISCHE PATENTANMELDUNG

(11) **EP 2 112 469 A1**
(43) Veröffentlichungstag der Anmeldung: **28.10.2009**
(21) Anmeldenummer: 09005769.6
(22) Anmeldetag: 24.04.2009
(51) Int. Cl.: G01B 21/04, G01B 11/03, G01B 11/24

(54) **Vorrichtung zur Vermessung und/oder Einstellung eines Werkzeugs**

(30) Priorität: 25.04.2008 DE 202008005750 U
(71) Anmelder: DMG Microset GmbH, 33689 Bielefeld (DE)
(72) Erfinder: Schwikowski, Manfred, 33334 Gütersloh (DE); Dyck, Walter, 33818 Leopoldshöhe (DE)
(74) Vertreter: TER MEER - STEINMEISTER & PARTNER GbR

(57) **Zusammenfassung**

Die Erfindung betrifft eine Vorrichtung zur Vermessung und/oder Einstellung eines Werkzeugs (12), mit einem verfahrbaren Schlitten (18), der eine Meßeinrichtung (20) oder einen Werkzeughalter trägt, einer Positioniereinrichtung zur Positionierung des Schlittens (18) und einer manuell bedienbaren Steuereinrichtung zum Betrieb der Positioniereinrichtung, wobei die Steuereinrichtung ein Stellorgan (22,26) umfasst, das aus einer zentralen Stellung in radialer Richtung nach außen kippbar oder auslenkbar ist, und dass die Positioniereinrichtung dazu vorgesehen ist, aufgrund einer Betätigung des Stellorgans (22,26) den Schlitten (18) in einer Fahrtrichtung zu verfahren, die der Auslenkungsrichtung des Stellorgans (22,26) zugeordnet ist.

## Beschreibung

Die vorliegende Erfindung betrifft eine Vorrichtung zur Vermessung und/oder Einstellung eines Werkzeugs gemäß dem Oberbegriff des Anspruchs 1.

Vorrichtungen der vorstehend genannten Art werden dazu verwendet, Werkzeuge vor ihrem Einsatz in einer Materialbearbeitungsmaschine einzustellen und auszumessen. Üblicherweise wird hierzu das betreffende Werkzeug in einen stationären Werkzeughalter eingespannt und durch eine Meßeinrichtung vermessen, wie etwa durch eine Kamera, die an einem im Raum verfahrbaren Schlitten angebracht ist. Umgekehrt ist es möglich, die Meßeinrichtung fest zu installieren, während der Schlitten mit dem Werkzeughalter verfahren wird. Zur Positionierung des Schlittens dient eine Positioniereinrichtung, die mit Hilfe einer manuell bedienbaren Steuereinrichtung betrieben wird. Beispielsweise kann der Schlitten entlang zweier Fahrachsen bewegt werden, die sich senkrecht zueinander entsprechend den Koordinaten eines zweidimensionalen Koordinatensystems erstrecken. Die Positionierung entlang jeweils einer Achse kann mit Hilfe eines Stellorgans wie etwa eines Handrads erfolgen, dessen Drehung in eine Verschiebung des Schlittens umgesetzt wird.

In diesem Fall muß für jede Koordinate ein eigenes Stellorgan vorgesehen sein. Die gesamte Vorrichtung wird hierdurch komplex und kostspielig, und der Einstellvorgang wird zu einer aufwendigen Prozedur, bei welcher die Zielkoordinaten des Schlittens getrennt voneinander einzustellen sind. Zur Vereinfachung dieses Vorgangs kann bei manchen Geräten der Schlitten von seinem Antrieb freigeschaltet und von Hand bewegt werden. Eine exakte Ausrichtung in die Zielposition läßt sich jedoch hierdurch nicht mit der erforderlichen Genauigkeit erreichen.

Aufgabe der vorliegenden Erfindung ist es daher, eine Vorrichtung der vorstehend genannten Art zu schaffen, die bei einfachem Aufbau eine schnelle Positionierung des Schlittens mit hoher Einstellgenauigkeit ermöglicht.

Diese Aufgabe wird erfindungsgemäß durch eine Vorrichtung mit den Merkmalen des Anspruchs 1 gelöst.

Die manuell bedienbare Steuereinrichtung der erfindungsgemäßen Vorrichtung umfaßt ein Stellorgan, aus einer zentralen Stellung radial nach außen kippbar oder auslenkbar ist. Die Positioniereinrichtung ist dazu vorgesehen, aufgrund der Betätigung des Stellorgans den Schlitten in einer Fahrtrichtung zu verfahren, die der Betätigungsrichtung des Stellorgans zugeordnet ist.

Die Betätigungsrichtungen des Stellorgans können beispielsweise den beiden Koordinaten X und Y eines zweidimensionalen Koordinatensystems entsprechen, die den Fahrachsen des Schlittens zugeordnet werden können. Darüber hinaus kann jedoch vorteilhafterweise die Möglichkeit vorgesehen sein, eine Auslenkungsrichtung vorzugeben, die sowohl eine X-Komponente als auch eine Y-Komponente aufweist, wie z.B. eine Raumdiagonale. Auf diese Weise kann ein beliebiger Zielpunkt auf direktem Wege angefahren werden, indem die Verbindungsrichtung vom Ausgangspunkt zum Zielpunkt durch das Stellorgan vorgegeben und diese durch die Positioniereinrichtung unmittelbar in eine gleichzeitige Bewegung entlang der beiden Fahrachsen umgesetzt wird. Der Zielpunkt wird auf diese Weise deutlich schneller erreicht als bei einer aufeinanderfolgenden Positionierung entlang der Achsen. Die erreichbare Einstellgenauigkeit ist genauso hoch wie bei den bekannten Vorrichtungen, und der gesamte Aufbau des Geräts wird vereinfacht.

Vorzugsweise ist die Positioniereinrichtung dazu vorgesehen, den Schlitten mit einer Geschwindigkeit zu verfahren, die der auf das Stellorgan ausgeübten Betätigungskraft und/oder dessen Auslenkung entspricht. Auf diese Weise ist nicht nur die Fahrtrichtung des Schlittens, sondern auch dessen Geschwindigkeit steuerbar. Beispielsweise kann der Schlitten mit hoher Geschwindigkeit in den Zielraum gefahren werden und mit einer deutlich niedrigeren Geschwindigkeit genau positioniert werden.

In einer weiteren bevorzugten Ausführungsform kann das Stellorgan als Kipphebel ausgebildet sein, beispielsweise als Steuerhebel in Form eines "Joysticks", wie er als Computer-Eingabegerät Verwendung findet. Beispielsweise kann die Auslenkung des Kipphebels in einer bestimmten Richtung in Form eines analogen Signals mit einer X- und einer Y-Komponente an die Positioniereinrichtung weitergegeben werden, welche die Signale in eine Fahrtrichtung und ggf. Fahrtgeschwindigkeit entlang der jeweiligen Achsen umsetzt. Es besteht darüber hinaus die Möglichkeit, den Kipphebel mit einem Federmechanismus auszustatten, der bei Druck auf den Hebel einen Federwiderstand zur Rückstellung des Hebels in seine Ausgangsposition bietet.

In einer weiteren bevorzugten Ausführungsform kann das Stellorgan als Steuerkreuz ausgebildet sein. Hierbei handelt es sich im wesentlichen um einen Mehr-Wege-Schalter, der den Druck des Benutzers in der jeweiligen Betätigungsrichtung aufnimmt.

Vorzugsweise ist der Schlitten mit einem Handgriff versehen, und das Stellorgan ist am Handgriff angebracht.

Bei dieser Ausführungsform folgt die Hand des Benutzers der Bewegung des Schlittens, und die Bedienung des Stellorgans kann durch einen Finger dieser Hand erfolgen, beispielsweise mit dem Daumen. Diese Art der Schlittenführung bietet den Vorteil, dass eine intuitive Kontrolle der Schlittenbewegung leichter möglich ist, als in einem Fall, in welchem das Stellorgan unabhängig vom Schlitten an einem Bedienungspult angebracht ist.

Im folgenden wird ein bevorzugtes Ausführungsbeispiel der vorliegenden Erfindung anhand der Zeichnung näher erläutert.
- Fig. 1: ist eine schematische Darstellung einer ersten Ausführungsform der erfindungsgemäßen Vorrichtung; und
- Fig. 2: ist eine Darstellung entsprechend Fig. 1 einer weiteren Ausführungsform der erfindungsgemäßen Vorrichtung.

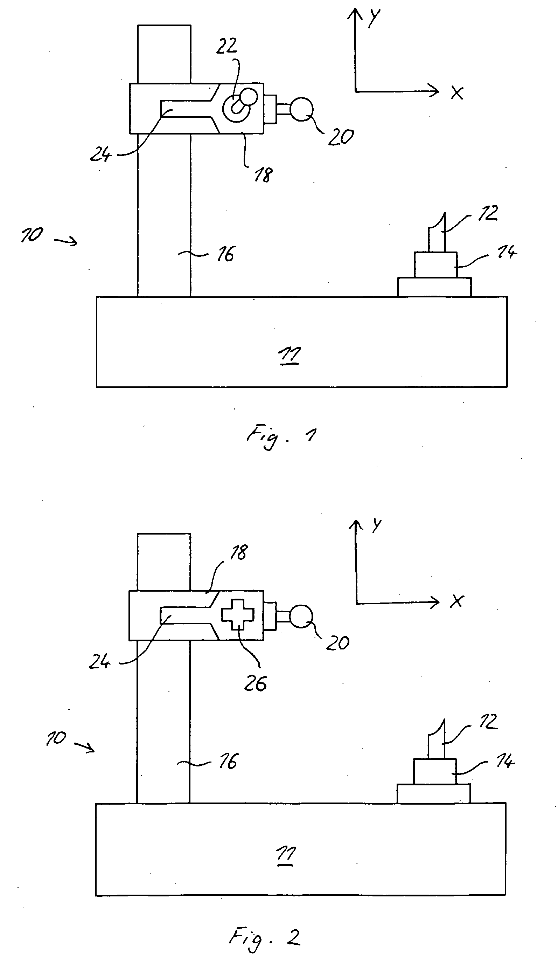

Fig. 1 zeigt eine Vorrichtung 10 zur Vermessung eines Werkzeugs 12, das in einem stationären Werkzeughalter 14 auf einer Basis 11 eingespannt ist. In der Figur befindet sich links vom Werkzeughalter 14 eine Säule 16, die auf der Basis 11 auftragt und einen Schlitten 18 trägt, an welchem wiederum eine Meßeinrichtung 20 wie etwa eine Kamera oder dergleichen angebracht ist. Der Schlitten 18 läßt sich entlang der Säule 16 aufwärts und abwärts bewegen, während die Säule 16 selbst entlang der Basis 11 auf den Werkzeughalter 14 zu oder von diesem weg beweglich ist. Damit ist der Schlitten 18 in einem zweidimensionalen Koordinatensystem beweglich, das in Fig. 1 oben mit seinen Koordinaten X und Y dargestellt ist. Der Richtung X (Abzisse) entspricht eine Bewegung der Säule 16 auf den Werkzeughalter 14 zu, während die Bewegung des Schlittens 18 an der Säule 16 aufwärts einer Bewegung entlang der Koordinate Y (Ordinate) entspricht. Die Bewegung des Schlittens 18 in diesem Koordinatensystem wird durch eine Positioniereinrichtung gesteuert, die in ihren wesentlichen Teilen im Inneren der Vorrichtung 10 verborgen ist und beispielsweise eine Welle umfassen kann, die sich senkrecht innerhalb der Säule 16 nach oben erstreckt. Der Schlitten 18 kann durch ein Rollringgetriebe mit dieser Welle gekoppelt sein, so dass die Rotation der Welle in eine Translationsbewegung des Schlittens 18 umgewandelt wird. In ähnlicher Weise kann die Positionierung der Säule 16 in der Raumrichtung X bzw. in der Gegenrichtung -X erfolgen.

Zur Steuerung der Positioniereinrichtung dient eine manuell bedienbare Steuereinrichtung mit einem Stellorgan 22, das an einem Handgriff 24 am Schlitten 18 angebracht ist. Bei dem Stellorgan 22 handelt es sich bei der in Fig. 1 gezeigten Ausführungsform um einen Kipphebel, der sich aus einer senkrechten Mittelstellung frei in eine beliebige Raumrichtung kippen läßt, also beispielsweise nach oben in der Richtung Y, nach rechts in Richtung X, nach links in Richtung -X und nach unten in Richtung in Richtung -Y. Insbesondere sind jedoch auch Zwischenstellungen möglich, z.B. schräg nach oben in einer Richtung XY, die eine X- und eine Y-Komponente aufweist. Die Positioniereinrichtung ist dazu vorgesehen, aufgrund einer Betätigung des Stellorgans 22 den Schlitten 18 in einer Richtung entsprechend der Betätigungsrichtung zu verfahren. Wird also der Kipphebel wie im oben angegebenen Beispiel schräg nach oben in einer Richtung XY gekippt, wird ein elektrisches Signal von der Steuereinrichtung an die Positioniereinrichtung weitergegeben, das eine Komponete X und eine Komponente Y umfaßt. Der Schlitten 18 kann dann an der Säule 16 nach oben in Richtung Y und gemeinsam mit der Säule 16 nach rechts in Richtung X verfahren werden. Beide Bewegungen entlang der unabhängigen Koordinaten X und Y können gleichzeitig erfolgen, so dass eine gewünschte Zielposition unmittelbar angefahren werden kann.

Eine Bedienungsperson kann der Bewegung des Schlittens 18 folgen, indem sie ihre Hand auf den Handgriff 24 legt, so dass mit dem Daumen der Kipphebel bedient werden kann. Auf diese Weise ist eine intuitive Bedienung der Vorrichtung 10 möglich. Die Positioniereinrichtung kann dazu vorgesehen sein, den Schlitten 18 mit einer Geschwindigkeit zu verfahren, die der Auslenkung des Kipphebels entspricht. Soll die Fahrt mit hoher Geschwindigkeit erfolgen, lenkt die Bedienungsperson den Kipphebel weit aus. Es ist auch möglich, ein Stellorgan 22 vorzusehen, das die vom Daumen der Bedienungsperson ausgeübte Betätigungskraft auf das Stellorgan 22 mit Hilfe eines Kraftdrucksensors mißt. Die Fahrgeschwindigkeit kann dann an die Größe der ausgeübten Kraft angepasst werden mit der Maßgabe, dass bei größerer Kraft eine höhere Fahrgeschwindigkeit aufgenommen wird.

Bei der in Fig. 2 gezeigten Ausführungsform ist das Stellorgan als Steuerkreuz 26 ausgebildet. Dabei handelt es sich im Prinzip um einen Mehr-Wege-Taster mit vier Kontakten, die jeweils unter den Enden der Arme des Steuerkreuzes 26 angebracht sind. Übt die Bedienungsperson mit dem Daumen einen Druck auf den in Fig. 2 rechten Arm des Steuerkreuzes 26 aus, wird dieses aus seiner Ruheposition leicht in diese Richtung gekippt und es erfolgt eine Bewegung in der Richtung X nach rechts, während ein Druck auf den oberen Arm des Steuerkreuzes 26 eine Bewegung nach oben in Richtung Y bewirkt. Die übrigen Arme des Steuerkreuzes 26 stehen für eine Bewegung des Schlittens 18 nach unten an der Säule 16 bzw. der Säule 16 nach links. Das Steuerkreuz 26 ist so ausgebildet, dass zwei benachbarte Arme gleichzeitig drückbar sind, also beispielsweise der rechte Arm und der obere Arm. In diesem Fall wird eine Bewegung des Schlittens 18 schräg nach oben in beiden Richtungen X und Y gleichzeitig bewirkt. In gleicher Weise läßt sich der Schlitten 18 schräg nach rechts unten, links unten oder links oben verfahren.

Das Stellorgan 22,26 ist also dazu vorgesehen, eine Auslenkungsrichtung aufzunehmen, die sich als Summe zweier zueinander senkrechter Richtungskomponenten darstellen läßt, entsprechend einem Vektor (X,Y) in einem zweidimensionalen Raum. Damit läßt sich jeder Punkt in diesem Koordinatensystem X,Y auf direktem Wege anfahren. Ein aufeinanderfolgendes Einstellen der Zielkoordinaten des Schlittens 18 ist nicht mehr erforderlich, da die Bedienung durch ein einziges Stellorgan 22,26 in einfacher und leicht steuerbarer Weise erfolgen kann.

Neben den hier gezeigten Ausführungsformen sind auch andere Ausbildungen des Stellorgans möglich. Beispielsweise kann das Stellorgan als Rollkugel oder "Trackball" ausgebildet sein, der für den Daumen der Bedienungsperson gut erreichbar am Handgriff 24 angebracht ist. Ein Rollen der Rollkugel wird in zwei Komponenten X und Y im zweidimensionalen Koordinatensystem umgesetzt, so dass entsprechend der Rotation der Kugel ein elektrisches Signal an die Positioniereinrichtung weitergegeben wird.

Es versteht sich, dass im Sinne der vorliegenden Erfindung die Auslenkungsrichtung des Stellorgans räumlich nicht exakt mit der gewünschten Fahrtrichtung des Schlittens 18 übereinstimmen muß. Vielmehr ist lediglich erforderlich, dass eine eindeutige Zuordnung einer bestimmten Auslenkungsrichtung mit einer Fahrtrichtung des Schlittens 18 gegeben sein muß. Ist beispielsweise der Kipphebel auf einem Bedienungspult angebracht, kann ein Druck des Hebels nach vorn einer Bewegung des Schlittens 18 aufwärts in Richtung Y entsprechen, ein Ziehen des Kipphebels zur Bedienungsperson hin einer Abwärtsbewegung usw. Die Zuordnung der Signale des Stellorgans, die der eingegebenen Auslenkungsrichtung entsprechen, müssen dann lediglich von der Positioniereinrichtung entsprechend verarbeitet werden, so dass die gewünschte Bewegung des Schlittens 18 erfolgen kann.

## Patentansprüche

1. Vorrichtung zur Vermessung und/oder Einstellung eines Werkzeugs (12), mit einem verfahrbaren Schlitten (18), der eine Meßeinrichtung (20) oder einen Werkzeughalter trägt, einer Positioniereinrichtung zur Positionierung des Schlittens (18) und einer manuell bedienbaren Steuereinrichtung zum Betrieb der Positioniereinrichtung, **dadurch gekennzeichnet, dass** die Steuereinrichtung ein Stellorgan (22,26) umfasst, das aus einer zentralen Stellung in radialer Richtung nach außen kippbar oder auslenkbar ist, und dass die Positioniereinrichtung dazu vorgesehen ist, aufgrund einer Betätigung des Stellorgans (22,26) den Schlitten (18) in einer Fahrtrichtung zu verfahren, die der Auslenkungsrichtung des Stellorgans (22,26) zugeordnet ist.

2. Vorrichtung gemäß Anspruch 1, **dadurch gekennzeichnet, dass** die Positioniereinrichtung dazu vorgesehen ist, den Schlitten (18) mit einer Geschwindigkeit zu verfahren, die der auf das Stellorgan (22,26) ausgeübten Betätigungskraft und/oder dessen Auslenkung entspricht.

3. Vorrichtung gemäß Anspruch 1 oder 2, **dadurch gekennzeichnet, dass** das Stellorgan (22) als Kipphebel ausgebildet ist.

4. Vorrichtung gemäß Anspruch 1 oder 2, **dadurch gekennzeichnet, dass** das Stellorgan (26) als Steuerkreuz ausgebildet ist.

5. Vorrichtung gemäß einem der vorhergehenden Ansprüche, **dadurch gekennzeichnet, dass** der Schlitten (18) mit einem Handgriff (24) versehen ist, und dass das Stellorgan (22,26) am Handgriff (24) angebracht ist.
